# EUROPÄISCHE PATENTSCHRIFT

(11) **EP 2 817 540 B1**
(45) Veröffentlichungstag und Bekanntmachung des Hinweises auf die Patenterteilung: **05.04.2017**
(21) Anmeldenummer: 13705954.9
(22) Anmeldetag: 13.02.2013
(51) Int. Cl.: F16J 15/32, F16J 15/56

(54) **DICHTUNGSANORDNUNG UND VERFAHREN ZU DESSEN HERSTELLUNG**
SEALING ARRANGEMENT AND METHOD FOR THE PRODUCTION THEREOF
ENSEMBLE D'ÉTANCHÉITÉ ET PROCÉDÉ DE FABRICATION CORRESPONDANT

(30) Priorität: 20.02.2012 DE 102012202571
(43) Veröffentlichungstag der Anmeldung: 31.12.2014
(73) Patentinhaber: Trelleborg Sealing Solutions Germany GmbH, 70565 Stuttgart (DE)
(72) Erfinder: JORDAN, Holger, 73765 Neuhausen a.d.F. (DE)
(74) Vertreter: Kohler Schmid Möbus Patentanwälte
(86) Internationale Anmeldenummer: PCT/EP2013/052850
(87) Internationale Veröffentlichungsnummer: WO 2013/124192

(56) Entgegenhaltungen:
- EP-A2- 0 253 086
- US-A- 3 092 427

## Beschreibung

Die Erfindung betrifft eine Dichtungsanordnung mit zwei Maschinenteilen, die entlang einer und/oder um eine Bewegungsachse relativ zueinander bewegbar angeordnet sind, und mit zumindest einer elastisch verformbaren Dichtung, die an einer Dichtungshaltestruktur an einem der beiden Maschinenteile im Preßsitz gehalten ist, wobei die Dichtung eine Gleitführung für die beiden Maschinenteile bildet. Die Dichtung weist zumindest eine an dem jeweils anderen Maschinenteil dichtend anliegende Dichtlippe auf, die sich in axialer Richtung von der Dichtungshaltestruktur wegerstreckt. (US-A-3 092 427)

Eine derartige Dichtungsanordnung, wie sie beispielsweise aus der DE 195 13 727 A1 bekannt ist, weist im Gebrauch häufig eine nur wenig befriedigende Dichtwirkung auf. Bei einem Einsatz solcher Dichtungsanordnungen in Umgebungen mit einem hohen Verunreinigungsgrad, beispielsweise bei Gebrauch in einem Stoßdämpfer, einem Bohrhammer oder dergl., sind daher häufig zusätzliche Dichtungsteile bzw. Abstreifelemente erforderlich, um die Gleitführung hinreichend abzudichten und einem übermäßigen Verschleiß der Dichtungsanordnung entgegenzuwirken. Dies ist kostenintensiv und unter fertigungstechnischen Aspekten wenig vorteilhaft.

Aufgabe der Erfindung ist es, eine eingangs genannte Dichtungsanordnung derart weiterzubilden, dass diese eine verbesserte Dichtwirkung und eine geringere Verschleißneigung aufweist. Es ist weiterhin Aufgabe der Erfindung, ein Verfahren zum Herstellen einer solchen Dichtungsanordnung anzugeben.

Diese Aufgabe wird erfindungsgemäß durch eine Dichtungsanordnung mit den in Patentanspruch 1 angegebenen Merkmalen gelöst. Die das Herstellungsverfahren betreffende Aufgabe wird durch ein Herstellungsverfahren mit den in Patentanspruch 15 angegebenen Merkmalen gelöst.

Der mit der erfindungsgemäßen Dichtungsanordnung verbundene Vorteil besteht im Wesentlichen in einer verbesserte Dichtfunktion der Dichtlippe. Der freie Endabschnitt der Dichtlippe ist über das Vorspannelement an dem einen Maschinenteil elastisch federnd abgestützt und wird von dem Vorspannelement mit einer definierten, d.h. frei vorgebbaren, Kontaktpressung an das andere Maschinenelement, d.h. dessen Dichtfläche, gepresst. In der Folge kommt es selbst bei Einsatz in hochgradig verunreinigten Umgebungen zu einem deutlich verringerten Einschleppen von Verunreinigungen, wie beispielsweise Schmutzpartikeln, und/oder eines Arbeitsfluids in den Bereich der Gleitführung. Darüber hinaus wird einem Austreten von im Bereich der Gleitführung, d.h. im abzudichtenden Dichtspalt zwischen den beiden Maschinenteilen, angeordnetem Schmiermittel, beispielsweise Schmieröl, zuverlässiger entgegengewirkt. Dies gilt für translatorische und/oder rotatorische Bewegungen der beiden Maschinenteile gegeneinander. Insgesamt können dadurch die erforderlichen Wartungsintervalle der Dichtungsanordnung verlängert und die Standzeiten der Dichtungsanordnung insgesamt erhöht werden. Darüber hinaus sind bei der erfindungsgemäßen Dichtungsanordnung zusätzliche Dichtungs- und/oder Abstreifelemente zum Schutz der durch die Dichtung gebildeten Gleitführung vor, insbesondere abrasiv wirkenden, Schmutzpartikeln oder dergl. nur noch im Ausnahmefall erforderlich bzw. erübrigen sich insgesamt. Dies ermöglicht einen konstruktiv einfacheren und kompakteren Aufbau der Dichtungsanordnung. Dies bietet insgesamt wirtschaftliche Vorteile.

Die Dichtung ist an dem einen Maschinenteil im radialen und/oder im axialen Preßsitz gehalten und kann als Innen- oder als Außendichtung ausgebildet sein. Bei einer Innendichtung wird die Dichtung von dem einen, beispielsweise als Zylinder ausgebildeten, Maschinenteil zumindest teilweise umfangsseitig umgriffen. Sofern die Dichtung als Außendichtung ausgelegt ist, umgreift diese das eine Maschinenteil, beispielsweise einen Kolben, umfangsseitig. Diese Ausführungsform ist bei hohen Anforderungen an die Querstabilität der Dichtung und der durch diese gebildete Gleitführung bevorzugt. Insgesamt wird dadurch ein besonders großes Einsatzspektrum der Dichtungsanordnung ermöglicht.

Nach einer bevorzugten Weiterbildung der Erfindung überdeckt die Dichtung die Dichtungshaltestruktur in radialer Richtung und liegt an dieser vorzugsweise unmittelbar an. Dadurch kann die Gleitführung für die beiden Maschinenteile in diesem Bereich auf einfache Weise steif, d.h. in radialer Richtung unnachgiebig, ausgeführt werden. Dies ermöglicht eine präzise Führung bzw. Lagerung der beiden Maschinenteile relativ zueinander.

Bei einem axialen Preßsitz der Dichtung an dem einen Maschinenteil ist diese vorzugsweise in einer Haltenut der Dichtungshaltestruktur des Maschinenteils geklemmt angeordnet gehalten. Alternativ oder zusätzlich kann die Dichtung über eine von der zur abzudichtenden Seite hin weisenden Nutflanke gehalten werden, indem die Nutflanke in das angrenzende Material der Dichtung mehr oder weniger stark eindringt. Dringt die Nutflanke nicht in das angrenzende Material der Dichtung ein, so kann die Dichtung über Zusatzelemente, wie Stifte, Schrauben und/oder Wandvorsprünge lagestabil in Position gehalten werden.

Insgesamt kann dadurch ein unerwünschtes axiales Verschieben bzw. Verdrehen der Dichtung relativ zur Dichtungshaltestruktur des einen Maschinenteils vermieden werden. Darüber hinaus kann die Dichtung auf besonders einfache Weise montiert werden.

Im konstruktiv einfachsten Fall ist die Dichtung nach der Erfindung mit einem ihrer Enden in der Haltenut angeordnet. Das andere Ende der Dichtung bildet dann erfindungsgemäß die Dichtlippe. Die für die Gleitführung der beiden Maschinenteile erforderliche Maß an Quer- bzw. Radialsteifigkeit der Gleitführung kann durch eine (Quer- bzw.) Radialabstützung der Dichtung in der Haltenut und ein entsprechend zu wählendes Elastizitätsmodul des Materials der Dichtung eingestellt werden. Die Haltenut des einen Maschinenteils kann darüber hinaus zumindest eine Nutflanke aufweisen, die sich unmittelbar bis zum Dichtspalt erstreckt, um die Dichtung axial optimal abzustützen und so einem übermäßigen Nachgeben der Dichtung bei radialer Belastung entgegenzuwirken.

Der Endabschnitt der Dichtlippe liegt an dem Vorspannelement vorzugsweise lose an. Dadurch kann die Dichtlippe gegenüber den beiden Maschinenteilen Ausgleichsbewegungen ausführen, wie diese beispielsweise bei einer Relativbewegung der beiden Maschinenteile gegeneinander erforderlich sein kann. Dadurch können beispielsweise Wellenschläge bzw. eine Exzentrizität der gegeneinander bewegbaren Maschinenteile ohne Verlust der Dichtfunktion bei zugleich verringertem Verschleiß der Dichtlippe, insbesondere im Bereich ihrer Dichtkante, ausgeglichen werden. Darüber hinaus ergibt sich dadurch eine besonders einfache Montage sowie Wartung der Dichtungsanordnung. So kann das Vorspannelement bei Bedarf einzeln gegen ein neues Vorspannelement ausgetauscht werden.

Es versteht sich, dass die Dichtung und das Vorspannelement auch einstückig ausgebildet sein können. Das Vorspannelement kann der Dichtung insbesondere angeformt sein.

Die Dichtungseinrichtung weist nach einer ganz besonders bevorzugten Weiterbildung der Erfindung zwei Dichtlippen auf. Die Dichtlippen erstrecken sich nach einer Ausführungsform der Erfindung in axialer Richtung voneinander weg.

Dadurch kann die durch die Dichtung gebildete Gleitführung axial beidseits auf konstruktiv einfachste Weise vor einem Eindringen von, insbesondere partikulären, Verunreinigungen und/oder einem Austreten von Schmiermittel aus dem Dichtspalt, geschützt werden. Diese Bauart zeichnet sich durch eine vergrößerte Einsatzbreite und erhöhte Langlebigkeit aus.

Nach einer alternativen Ausführungsform der Erfindung können die Dichtlippen auch in axialer Richtung gleichgerichtet angeordnet sein (Tandemdichtung).

Erfindungsgemäß können sich die Dichtlippen einander insbesondere in Formgebung, Bemaßung, Material und/oder in ihren Materialeigenschaften entsprechen.

Eine bei hohen mechanischen Belastungen der Dichtungsanordnung besonders vorteilhafte Ausführungsform der Erfindung zeichnet sich dadurch aus, dass die Dichtung zwei Dichtungselemente mit jeweils einer Dichtlippe aufweist. In diesem Falle ist die Dichtung somit zweiteilig, d.h. zweistückig, aufgebaut. Die beiden Dichtungen sind erfindungsgemäß vorzugsweise voneinander beabstandet angeordnet. Die beiden Dichtungselemente können dabei mit ihren einander zuweisenden Enden in unterschiedlichen Haltenuten des einen Maschinenelements angeordnet sein. Das die Dichtungshaltestruktur aufweisende Maschinenteil kann in diesem Fall eine (starre) Lagerstruktur für das andere Maschinenteil aufweisen, die in axialer Richtung zwischen den beiden Dichtungselementen angeordnet ist. Die Lagerstruktur ist dabei gegenüber der durch die Dichtung gebildeten Gleitführung vorzugsweise nochmals steifer, d.h. ist bei Belastung in radialer Richtung noch weniger nachgiebig. Dadurch ergibt sich eine besonders präzise und zugleich robuste Lagerung bzw. Führung der beiden Maschinenteile relativ zueinander. Zugleich können so mechanische Belastungen der Dichtung bzw. der Gleitführung im Betrieb auf einfache Weise begrenzt werden, was für die Langlebigkeit der Dichtungsanordnung von Vorteil ist. Die Lagerstruktur ist darüber hinaus durch die beiderseits angeordneten Dichtungselemente der Dichtung wirkungsvoll vor Verunreinigungen geschützt (gekapselter Aufbau), wodurch Funktionsstörungen der Lagerstruktur im Betrieb insgesamt minimiert werden können.

Die Lagerstruktur kann erfindungsgemäß an ihrer dem anderen Maschinenteil zuweisenden Lagerfläche zumindest eine, bevorzugt mehrere, Vertiefungen aufweisen, um mögliche Verunreinigungen, die in den von den beiden Dichtungselementen axial begrenzten Dichtspalt zwischen den beiden Maschinenteilen eingedrungen sind, aufzunehmen. Die Vertiefung bzw. Vertiefungen sind dabei vorteilhafter Weise quer zur Bewegungsrichtung der beiden Maschinenteile entlang/um die Bewegungsachse angeordnet. Insgesamt kann dadurch eine Funktionsbeinträchtigung der Dichtungsanordnung, insbesondere der Gleitführung, nochmals weiter reduziert werden. Durch die Vertiefungen kann darüber hinaus ein besonders geringer Reibungswiderstand der Lagerstruktur realisiert werden.

Die Dichtungseinrichtung besteht nach einer bevorzugten Ausführungsform der Erfindung aus einem zähelastischen Material. Das zähelastische Material ist bevorzugt ein Polymermaterial, insbesondere Polytetrafluorethylen (PTFE). Dadurch kann einerseits eine gegenüber thermischen, mechanischen oder auch chemischen Einflüssen robuste Abdichtung der beiden Maschinenteile gegeneinander sowie Gleitlagerung der beiden Maschinenteile realisiert werden.

Das Vorspannelement ist erfindungsgemäß bevorzugt in einer Vertiefung, beispielsweise einer Nut des einen Maschinenteils, angeordnet. Dadurch kann das Vorspannelement auf konstruktiv einfachste Weise gegenüber einer unerwünschten Lageänderung relativ zum einen Maschinenteil gesichert werden. Zum anderen bietet dies fertigungstechnische Vorteile, da das Vorspannelement bei Montage der Dichtungsanordnung lediglich in die Nut des einen Maschinenteils eingelegt werden muss.

Bei einer geeigneten Wahl des Querschnitts und Materials des Vorspannelements lässt sich die Vorspannung der Dichtlippe gegen das andere Maschinenteil, d.h. die Kontaktpressung der Dichtlippe gegen das andere Maschinenteil, auf einfache Weise einstellen. Es versteht sich, dass das Vorspannelement eine kreisrunde, ovale oder auch polygonale Querschnittsform aufweisen kann.

Das Vorspannelement kann insbesondere ringförmig (beispielsweise als O-Ring) ausgeführt sein und besteht vorzugsweise aus einem, insbesondere thermoplastischen, Elastomer.

Das erfindungsgemäße Verfahren zum Herstellen der erfindungsgemäßen Dichtungsanordnung weist die folgenden Schritte auf: Anordnen des zumindest einen Vorspannelements an dem einen Maschinenteil, vorzugsweise in einer Nut des einen Maschinenteils, und nachfolgendes Verpressen zumindest eines Dichtungsrohlings mit der Dichtungshaltestruktur des einen Maschinenteils unter Bildung der Dichtung. Der Dichtungsrohling kann insbesondere eine hülsenförmige oder ringscheibenförmige Gestalt aufweisen.

Die Erfindung betrifft eine Dichtungsanordnung mit zwei Maschinenteilen, die entlang/um eine Bewegungsachse relativ zueinander bewegbar angeordnet sind und mit zumindest einer elastisch verformbaren Dichtung, die an einer Dichtungshaltestruktur an einem der beiden Maschinenteile im Preßsitz gehalten ist. Die Dichtung bildet eine Gleitführung 40 für die beiden Maschinenteile und weist zumindest eine an dem jeweils anderen Maschinenteil dichtend anliegende Dichtlippe auf, die sich in axialer Richtung von der Dichtungshaltestruktur wegerstreckt. Ein freier Endabschnitt der Dichtlippe ist über zumindest ein elastisch verformbares Vorspannelement 38 an dem einen Maschinenteil derart abgestützt, dass der freie Endabschnitt an dem anderen Maschinenteil mit einer definierten Kontaktpressung anliegt.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden.

Nachfolgend wird die Erfindung anhand von in der Zeichnung wiedergegebenen Ausführungsbeispielen näher erläutert.

Die gezeigten und beschriebenen Ausführungsformen sind nicht als abschließende Aufzählung zu verstehen, sondern haben vielmehr beispielhaften Charakter für die Schilderung der Erfindung.

In der Zeichnung zeigen:
- Fig. 1: eine erfindungsgemäße Dichtungsanordnung mit einer als Innendichtung ausgebildeten Dichtung, die an einer Dichtungshaltestruktur eines Maschinenteils im axialen Preßsitz gehalten ist, wobei die Dichtung eine Dichtlippe aufweist, die die Dichtungshaltestruktur in axialer Richtung überragt, wobei die Dichtlippe mit ihrem freien Endabschnitt über ein elastisches Vorspannelement an dem einen Maschinenteil derart abgestützt ist, dass dieser mit einer definierten Kontaktpressung an ein anderes Maschinenteil gepresst wird, im Längsschnitt;
- Fig. 2: eine Dichtungsanordnung mit einer Dichtung, die durch zwei Dichtungselemente mit jeweils einer Dichtlippe gebildet ist, wobei die Dichtungselemente jeweils in einem axialen Preßsitz an dem einen Maschinenteil angeordnet sind, im Längsschnitt;
- Fign. 3: eine Dichtungsanordnung mit einer Dichtung, die durch zwei Dichtungselemente gebildet ist, wobei die Dichtungselemente jeweils im radialen Preßsitz an einem Maschinenteil gehalten sind, im Längsschnitt (Fig. 3A) und ausschnittsweise mit geringfügigen konstruktiven Änderungen in einer geschnittenen perspektivischen Ansicht (Fig. 3B);
- Fig. 4: eine Dichtungsanordnung mit einer einstückigen Dichtung, die zwei voneinander wegweisende Dichtlippen aufweist , wobei die Dichtung in einem radialen Preßsitz an dem einen Maschinenteil gehalten ist, im Längsschnitt;
- Fig. 5: eine Dichtungsanordnung mit einer als Außendichtung ausgebildeten Dichtung, die auf einer Mantelfläche eines Maschinenteils im radialen Preßsitz angeordnet ist, wobei die Dichtung beidenends voneinander wegweisende Dichtlippen aufweist, in teilweise geschnittener perspektivischer Ansicht; und

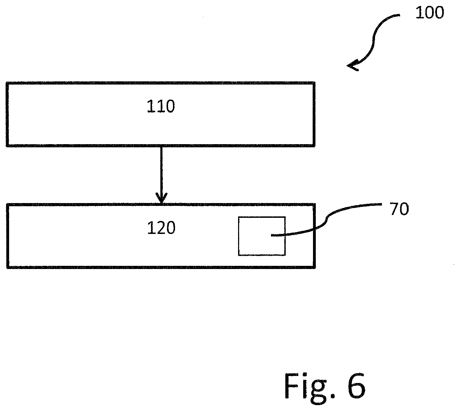

- Fig. 6: ein Blockdiagramm mit einzelnen Verfahrensschritten zum Herstellen einer erfindungsgemäßen Dichtungsanordnung.

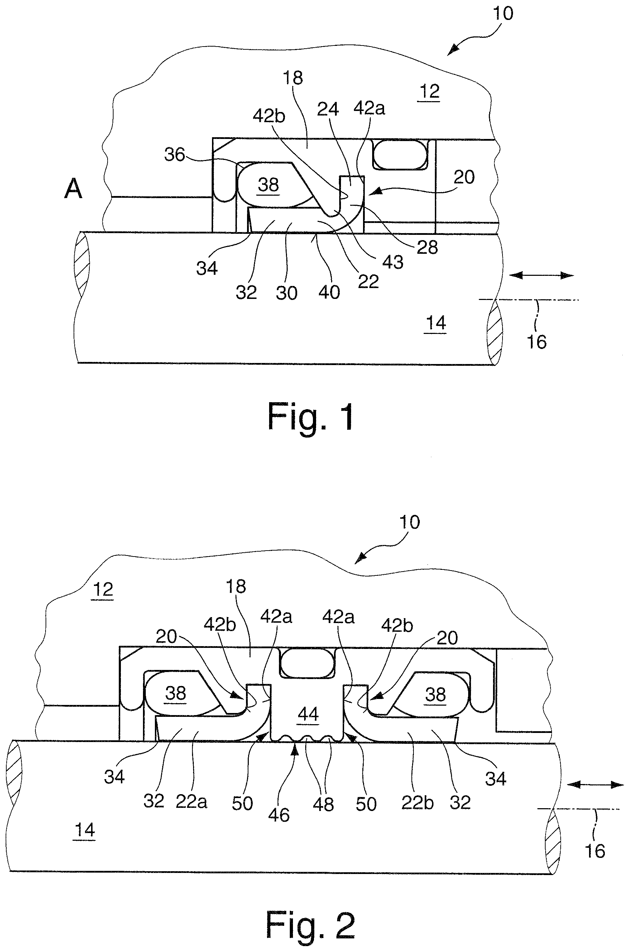

**Fig. 1** zeigt eine Dichtungsanordnung **10** mit zwei Maschinenteilen **12, 14,** die entlang einer Bewegungsachse **16** gegeneinander bewegbar angeordnet sind. Das Maschinenteil 12 ist vorliegend beispielhaft als Zylinder und das Maschinenteil 14 als ein in dem Zylinder hin- und her bewegbar angeordneter Kolben ausgebildet. Das Maschinenteil 12 weist einen kartuschenartigen Dichtungseinsatz **18** aus einem im Wesentlichen starren, hier metallischen, Material auf. Der Dichtungseinsatz 18 weist eine als Haltenut ausgebildete Dichtungshaltestruktur **20** auf, in der eine Dichtung **22** mit einem endständigen Befestigungsabschnitt **24** im axialen Preßsitz gehalten ist. Der Befestigungsabschnitt 24 ist über einen gebogenen Dichtungsabschnitt **26** mit einer in axialer Richtung **28** längserstreckten Dichtlippe **30** verbunden. Die Dichtlippe 30 erstreckt sich von der Dichtungshaltestruktur 20 des Maschinenteils 12 in axialer Richtung weg und steht in axialer Richtung über die Dichtungshaltestruktur 20 hervor. Ein freier Endabschnitt **32** der Dichtlippe 30 ist mit einer Dichtkante **34** versehen. Die Dichtlippe 30 weist zur abzudichtenden Seite **A** hin.

Wie in der Fig. 1 gezeigt ist, überdeckt der freien Endabschnitt 32 der Dichtlippe 30 eine in dem Dichtungseinsatz 18 angeordnete, hier ringförmige, Nut **36,** in der ein Vorspannelement **38** angeordnet ist. Der freie Endabschnitt 32 der Dichtung 22 liegt an dem Vorspannelement 38 lose an und ist über dieses an dem ersten Maschinenteil 12 elastisch federnd abgestützt. Das Vorspannelement 38 weist bei dem hier gezeigten Ausführungsbeispiel im unbelasteten Zustand einen im Wesentlichen kreisförmigen Querschnitt auf, kann aber grundsätzlich auch einen anderen Querschnitt aufweisen.

Der Querschnitt des Vorspannelements 38 ist im Verhältnis zur Nuttiefe der Nut 36 derart gewählt, dass das Vorspannelement 38 in seinem hier gezeigten belasteten Zustand aus der Nut 32 hervorragt und den freien Endabschnitt 30 der Dichtlippe 30 mit der Dichtkante 34 unter einer definierten Vorspannung an das andere Maschinenteil 14 presst. Das Vorspannelement 38 besteht aus einem handelsüblichen Elastomer, das bedarfsweise Zuschlagstoffe (Additive) aufweisen kann.

Die Dichtung 22 besteht aus einem zähelastischen Polymermaterial, hier Polytetrafluorethylen (PTFE). Es versteht sich, dass das Polymermaterial der Dichtung bedarfsweise Zuschlagstoffe (Additive) oder in der Zeichnung nicht näher wiedergegebene Verstärkungseinlagen enthalten kann.

Die Dichtung 22 bildet mit einem an die Dichtungshaltestruktur 20 axial angrenzenden Dichtlippenabschnitts ein in radialer Richtung steifes (im Wesentlichen unnachgiebiges) Gleitlager **40** für die beiden gegeneinander bewegbaren Maschinenteile 12, 14. Eine der Dichtlippe 30 abgewandte Nutflanke **42a** der Haltenut steht zum axialen Abstützen der Dichtlippe 30 gegenüber der anderen Nutflanke **42b** der Haltenut radial weiter in Richtung auf das Maschinenteil 14 hervor. Wie in Fig. 1 gezeigt ist, dringt die Nutflanke 42b zusammen mit einem sich an die Nutflanke 42b in Richtung auf die abzudichtende Seite A anschließenden Wandvorsprung **43** in das Material der Dichtung 22 ein. Die Dichtung 22 ist dadurch gegenüber an der Dichtung 22 angreifenden axialen Kräften lagestabil an dem Maschinenteil 12 in Position gehalten. Der Wandvorsprung 43 kann in Richtung des Innenumfangs des Maschinenteils 12 segmentiert ausgebildet sein. In diesem Fall ist die Dichtung 22 an dem Maschinenteil 12 zusätzlich drehfest gehalten.

**Fig. 2** zeigt eine Dichtungsanordnung 10, die sich von dem vorstehend erläuterten Ausführungsbeispiel im Wesentlichen darin unterscheidet, dass die Dichtung durch zwei einzelne Dichtungselemente **22a, 22b** gebildet ist. Die beiden Dichtungselemente 22a, 22b sind einenends jeweils an unterschiedlichen Haltenuten 20a des Dichtungseinsatzes 18 im axialen Preßsitz gehalten. Die beiden Dichtungselemente 22a, 22b können in den Nuten auch alternativ oder zusätzlich im radialen Preßsitz gehalten sein. Die Nutflanken 42b der Haltenute 20 dringen bei dem in Fig. 2 gezeigten Ausführungsbeispiel nicht in das Material der einzelnen Dichtungselemente 22a, 22b ein. Die Dichtungselemente 22a, 22b weisen jeweils eine Dichtlippe 26 auf, die in der vorstehend beschriebenen Weise jeweils über ein Vorspannelement 38 am ersten Maschinenteil 12 abgestützt sind. Die beiden Dichtlippen 26 erstrecken sich dabei in axialer Richtung voneinander weg. Das Maschinenteil 12 weist zusätzlich eine Lagerstruktur **44** auf, die zwischen den beiden voneinander beabstandet angeordneten Dichtungselementen 22a, 22b angeordnet ist. Die Lagerstruktur 44 dient einer in radialer Richtung hochsteifen Lagerung des anderen Maschinenteils 14 und liegt mit ihrer Lagerfläche **46** am Maschinenteil 14 an. Die Lagerfläche 46 weist rillenförmige Vertiefungen **48** auf, die quer zur Bewegungsachse ausgerichtet sind und einer Aufnahme von im Betrieb der Dichtungsanordnung 10 in den Dichtspalt **50** eingedrungenen, insbesondere partikulären, Verunreinigungen dienen. Die Vertiefungen 48 gewährleisten darüber hinaus geringen Reibungswiderstand der Lagerfläche 46.

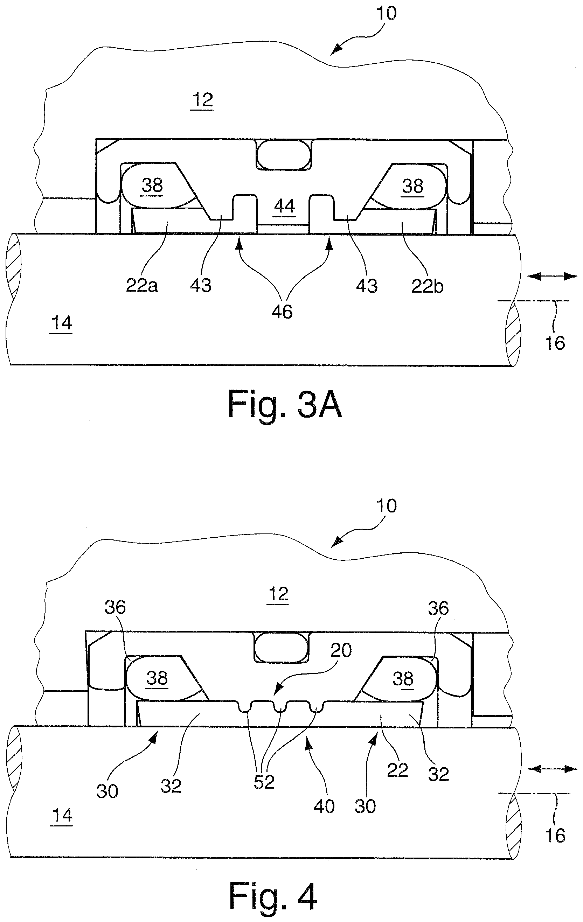

**Fig. 3A** zeigt eine Prinzipskizze einer Dichtungsanordnung 10, die sich von der in Fig. 2 gezeigten Dichtungsanordnung im Wesentlichen darin unterscheidet, dass die beiden Nutflanken 42b (siehe Fig. 2) sowie die Wandvorsprünge 43 (siehe Fig. 3a) in das Material der Dichtungselemente 22a, 22b eindringen. Die beiden Dichtungselemente 22a, 22b sind in den Haltenuten geklemmt gehalten angeordnet. Zwischen den beiden axial voneinander beabstandet angeordneten Dichtungselementen 22a, 22b ist keine Lagerstruktur angeordnet.

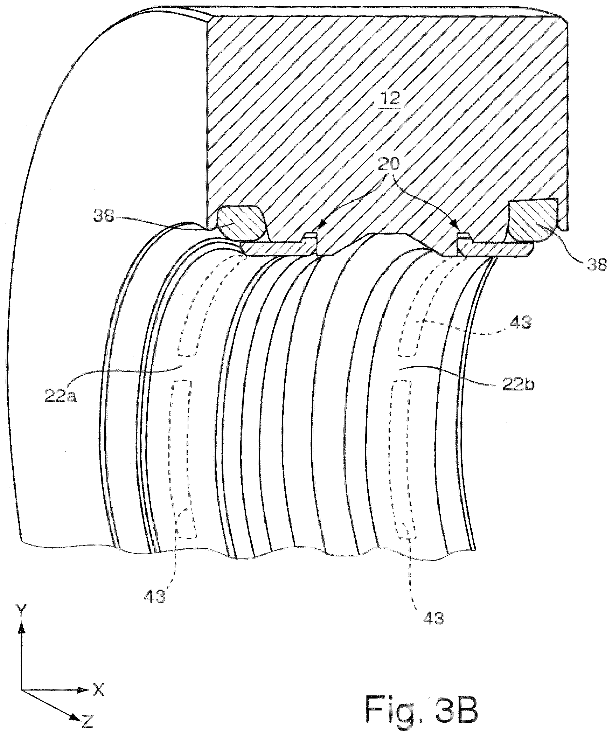

**Fig. 3B** zeigt das Maschinenteil 12 der in Fig. 3A gezeigten Dichtungsanordnung mit geringfügigen konstruktiven Änderungen zusammen mit den beiden Dichtungselementen 22a, 22b in einer perspektivischen Ansicht. Die in Umfangsrichtung des Maschinenteils 12 segmentiert ausgebildeten Wandvorsprünge 43 sind in dieser Ansicht gut zu erkennen. Die Wandvorsprünge 43 sind von den Dichtungselementen 22a, 22b jeweils verdeckt und daher mit gestrichelter Linie wiedergegeben.

**Fig. 4** zeigt eine Dichtungsanordnung 10, bei der die Dichtung 22 einstückig als Innendichtung ausgeführt ist. Die Dichtung 22 ist hier an der zylindrischen Dichtungshaltestruktur 20 des Maschinenteils 12 im Wesentlichen im radialen Preßsitz gehalten. Die Dichtungshaltestruktur 20 weist mehrere ringförmige Vorsprünge **52** auf, durch die die mit der Dichtungshaltestruktur 20 verpresste Dichtung 22 an dem Maschinenteil 12 axial unverschieblich gehalten ist. Die Vorsprünge 52 können in alternativer Ausgestaltung auch segment- oder punktförmig über den Innenumfang des einen Maschinenteils 12 verteilt angeordnet sein. Die Dichtung 22 überdeckt die Dichtungshaltestruktur 20 in radialer Richtung vollständig und weist zwei sich in axialer Richtung erstreckende und voneinander wegweisende Dichtlippen 30 auf. Die beiden Dichtlippen 30 stehen in der bereits vorstehend beschriebenen Weise jeweils in axialer Richtung über die Dichtungshaltestruktur 20 hervor und überdecken die Nuten 36 radialseitig. Die freien Endabschnitte 32 der beiden Dichtlippen 26 liegen auch hier durch das jeweilige elastische Vorspannelement 38 am Maschinenteil 14 unter einer definierten Vorspannung (mit einer definierten Kontaktpressung) elastisch federnd an. Ein die Dichtungshaltestruktur 20 radial überdeckender und an dieser vollflächig anliegender Längsabschnitt der Dichtung 22 bildet die in radialer Richtung starre Gleitführung 40 für die beiden Maschinenteile 12, 14.

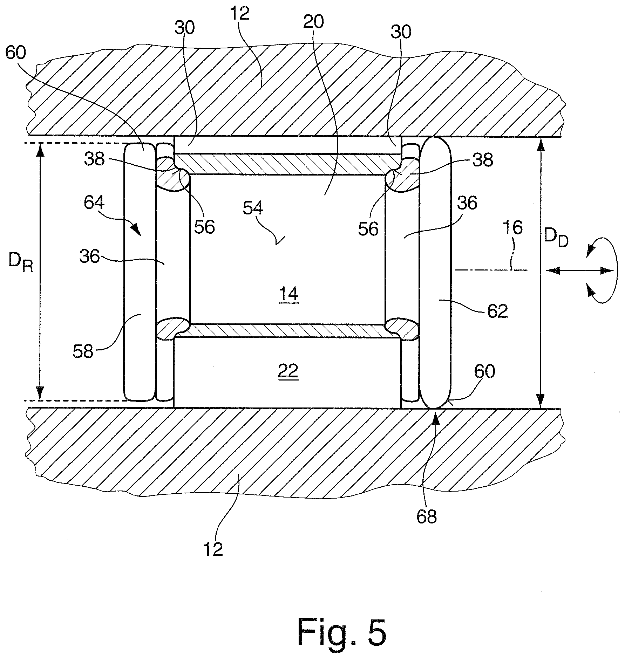

**Fig. 5** zeigt eine Dichtungsanordnung 10, die sich von der Dichtungsanordnung nach Fig. 3 im Wesentlichen darin unterscheidet, dass die Dichtung 22 im Sinne einer Außendichtung an dem als Kolben ausgebildeten Maschinenteil 14 im radialen Preßsitz angeordnet ist. Der Kolben kann beispielsweise als ein im anderen Maschinenteil geführter Döpperkolben einer nicht näher gezeigten Schlagbohrmaschine bzw. eines Bohrhammers ausgebildet sein. Die Dichtungshaltestruktur 20 des Kolbens ist durch die äußere Mantelfläche 54 des Kolbens gebildet und in axialer Richtung jeweils von Nuten 36 der äußeren Mantelfläche 54 des Maschinenteils 14 begrenzt. In den Nuten 36 sind die ringförmigen elastomeren Vorspannelemente 38 axial unverschieblich am Kolben angeordnet. Die Dichtung weist auch bei diesem Ausführungsbeispiel zwei Dichtlippen 30 auf, die sich axial zur Bewegungsachse 16 erstrecken und die mit ihren freien Endabschnitten 32 jeweils über eines der Vorspannelemente 38 mit definierter Kontaktpressung an das andere Maschinenteil 12 gepresst werden. Daraus ergibt sich wie auch bei den vorstehend erläuterten Ausführungsbeispielen der Erfindung eine optimierte Abstreif- und Dichtwirkung der Dichtlippen 30.

Die beiden freien Endabschnitte 32 liegen an den Vorspannelementen 38 jeweils lose an und weisen jeweils eine in Richtung auf ihr freies Ende abnehmende Dicke auf. Eine dem Vorspannelement 38 anliegende Kontaktfläche **56** der Dichtlippen 30 ist dabei jeweils einer Außenkontur des Vorspannelements entsprechend ausgeformt und vorliegend in axialer Richtung (leicht) konkav ausgebildet. Die freien Endabschnitte 32 der Dichtlippen 30 stützen sich so in axialer Richtung an den Vorspannelementen 38 ab.

Die von der äußeren Mantelfläche 54 des Kolbens gebildete Dichtungshaltestruktur 20 kann in nicht näher wiedergegebener Weise eine oder mehrere Vertiefungen aufweisen, in die die Dichtung 20 eingreift und durch die ein axiales Verschieben bzw. Verdrehen der Dichtung gegenüber dem Kolben zuverlässig unterbunden ist.

Der Kolben weist einenends (Abstreifseite) einen Ringbund **58** mit einer abgeflachten Außenseite **60** auf. Der Ringbund weist einen im Vergleich zum maximalen Außendurchmesser **D_{D}** der Dichtung 22 verringerten Ringbunddurchmesser **D_{R}** auf, um einer Gefahr eines Einklemmens von Partikeln (beispielsweise Verunreinigungen) zwischen dem Ringbund 58 und dem zweiten Maschinenteil 14 entgegenzuwirken. Der Kolben weist anderenends (etwa einer Ölseite der Dichtungsanordnung 10 zuweisend), einen Zentrierbund **62** mit einer in axialer Richtung gerundet ausgeführten Außenseite 60 auf.

Bei den vorstehend beispielhaft erläuterten Dichtungsanordnungen können die Dichtungen 22 und die zugehörigen Vorspannelemente 38 in nicht näher wiedergegebener Weise jeweils einstückig ausgeführt sein. Darüber hinaus können der kartuschenförmige Dichtungseinsatz 18 und das den Dichtungseinsatz aufweisende Maschinenteil einstückig ausgebildet sein. Es versteht sich, das die beiden Maschinenteile 12, 14 der vorstehend erläuterten n Dichtungsanordnungen 10 zusätzlich oder alternativ um die gezeigte Bewegungsachse 16 relativ zueinander bewegbar (verdrehbar) sein können.

Die erfindungsgemäße Dichtungsanordnung 10 eignet sich insbesondere zum Einsatz in Schlagbohrmaschinen, Bohrhämmern, Stoßdämpfern und dergleichen.

In **Fig**. **6** ist ein Blockschaubild mit einzelnen Schritten des Verfahrens zum Herstellen der erfindungsgemäßen Dichtungsanordnung wiedergegeben. Das Verfahren 100 umfasst die folgenden Schritte:

Anordnen 110 des zumindest einen Vorspannelements 38 an einem der Maschinenteile 12, 14 und nachfolgendes Verpressen 120 zumindest eines Dichtungsrohlings 70 mit der Dichtungshaltestruktur 20 des einen Maschinenteils 12, 14 unter Bildung der Dichtung 22. Das Verpressen des Dichtungsrohlings kann im Falle einer zu bildenden Innendichtung insbesondere über einen nicht näher wiedergegebenen Werkzeugdorn erfolgen.

## Patentansprüche

1. Dichtungsanordnung (10) mit
zwei Maschinenteilen (12, 14), die entlang einer und/oder um eine Bewegungsachse (16) relativ zueinander bewegbar angeordnet sind,
mit zumindest einer Dichtung (22), die aus einem zähelastischen Material besteht und die an einer Dichtungshaltestruktur (20) an einem der beiden Maschinenteile (12, 14) im Preßsitz gehalten ist,
wobei die Dichtung (22) zumindest eine an dem jeweils anderen Maschinenteil (12, 14) dichtend anliegende Dichtlippe (30) aufweist, die sich in axialer Richtung von der Dichtungshaltestruktur (20) in Richtung einer abzudichtenden Seite (A) der Dichtungsanordnung (10) wegerstreckt und
wobei ein freier Endabschnitt (32) der Dichtlippe (30) über zumindest ein elastisch verformbares Vorspannelement (38) an dem einen Maschinenteil (12, 14) derart abgestützt ist, dass der freie Endabschnitt (32) an dem anderen Maschinenteil (12, 14) mit einer definierten Kontaktpressung anliegt und **dadurch gekennzeichnet, dass** die Dichtung (22)
- mit einem an die Dichtungshaltestruktur (20) axial angrenzenden Dichtlippenabschnitt, in dessen Material eine Nutflanke (42b) der Dichtungshaltestruktur mit einem sich an die Nutflanke (42b) in Richtung auf die abzudichtende Seite (A) der Dichtungsanordnung (10) anschließenden Wandvorsprung (43) des die Dichtungshaltestruktur (20) aufweisenden Maschinenteils (12, 14) eindringt
oder
- mit einem Längsabschnitt, der die Dichtungshaltestruktur (20) radial überdeckt und der an der Dichtungshaltestruktur (20) unmittelbar anliegt,
ein in radialer Richtung steifes, d.h. im Wesentlichen unnachgiebiges, Gleitlager (40) für die beiden Maschinenteile (12, 14) bildet.

2. Dichtungsanordnung nach Anspruch 1, **dadurch gekennzeichnet, dass** die Dichtung (22) an der Dichtungshaltestruktur (20) im radialen und/oder im axialen Preßsitz gehalten ist.

3. Dichtungsanordnung nach einem der Ansprüche 1 oder 2, **dadurch gekennzeichnet, dass** der freie Endabschnitt (32) der Dichtlippe (30) an dem Vorspannelement (38) lose aufliegt.

4. Dichtungsanordnung nach einem der vorhergehenden Ansprüche, **dadurch gekennzeichnet, dass** die Dichtung (22) zwei Dichtlippen (30) aufweist, die sich in axialer Richtung voneinander wegerstrecken.

5. Dichtungsanordnung nach Anspruch 4, **dadurch gekennzeichnet, dass** die Dichtlippen (30) hintereinander liegend in gleiche Richtung weisen.

6. Dichtungsanordnung nach Anspruch 4 oder 5, **dadurch gekennzeichnet, dass** die Dichtung (22) zwei Dichtungselemente (22a, 22b) mit jeweils einer Dichtlippe (30) aufweist.

7. Dichtungsanordnung nach Anspruch 6, **dadurch gekennzeichnet, dass** eines der Maschinenteile (12, 14) eine starre Lagerstruktur (44) für das jeweilig andere Maschinenteil (12, 14) aufweist, die in axialer Richtung zwischen den beiden Dichtungselementen (22a, 22b) angeordnet ist.

8. Dichtungsanordnung nach Anspruch 7, **dadurch gekennzeichnet, dass** die Lagerstruktur (44) an ihrer Lagerfläche (46) zumindest eine Vertiefung (48) aufweist, die vorzugsweise quer zur Bewegungsachse (16) angeordnet ist.

9. Dichtungsanordnung nach Anspruch 1, **dadurch gekennzeichnet, dass** das zähelastische Material ein Polymermaterial, bevorzugt Polytetrafluorethylen (PTFE), ist.

10. Dichtungsanordnung nach einem der vorhergehenden Ansprüche, **dadurch gekennzeichnet, dass** das Vorspannelement (38) in einer Nut (36) des einen Maschinenteils (12, 14) angeordnet ist.

11. Dichtungsanordnung nach einem der vorhergehenden Ansprüche, **dadurch gekennzeichnet, dass** das Vorspannelement (38) aus einem Elastomer besteht.

12. Dichtungsanordnung nach einem der vorhergehenden Ansprüche, **dadurch gekennzeichnet, dass** die Dichtungshaltestruktur (20) von einem kartuschenartigen Dichtungseinsatz (18) gebildet ist, der an dem einen Maschinenteil (12, 14), vorzugsweise lösbar, befestigt ist.

13. Verfahren (100) zum Herstellen einer Dichtungsanordnung (10) nach einem der vorhergehenden Ansprüche, **gekennzeichnet durch** die folgenden Schritte:
- Anordnen (110) des zumindest einen Vorspannelements (38) an dem einen Maschinenteil (12, 14) und
- nachfolgendes Verpressen (120) zumindest eines hülsen- oder scheibenförmigen Dichtungsrohlings (70) mit der Dichtungshaltestruktur (20) des einen Maschinenteils (12, 14) über einen Werkzeugdorn unter Bildung der Dichtung (22).

## Claims

1. Sealing arrangement (10) having
two machine components (12, 14) which are arranged so as to be able to be moved relative to each other along and/or about a movement axis (16),
having at least one seal (22) which consists of a tough-elastic material and which is retained on a seal retention structure (20) on one of the two machine components (12, 14) in a press fit,
wherein the seal (22) has at least one sealing lip (30) which is in sealing abutment with the other machine component (12, 14) and which extends in an axial direction away from the seal retention structure (20) in the direction of a side (A) of the sealing arrangement (10) which is intended to be sealed and
wherein a free end portion (32) of the sealing lip (30) is supported by means of at least one resiliently deformable pretensioning element (38) on the one machine component (12, 14) in such a manner that the free end portion (32) is in abutment with the other machine component (12, 14) with a defined contact pressure
and **characterized in that** the seal (22),
- having a sealing lip portion which axially adjoins the seal retention structure (20) and in whose material a groove flank (42b) of the seal retention structure is introduced with a wall projection (43) of the machine component (12, 14) which has the seal retention structure (20), which wall projection adjoins the groove flank (42b) in the direction towards the side (A) of the sealing arrangement (10) which is intended to be sealed,
or
- having a longitudinal portion which radially covers the seal retention structure (20) and which is directly in abutment with the seal retention structure (20),
forms a plain bearing (40) which is rigid in a radial direction, that is to say, which is substantially non-pliable, for both machine components (12, 14).

2. Sealing arrangement according to Claim 1, **characterized in that** the seal (22) is retained on the seal retention structure (20) in a radial and/or in an axial press fit.

3. Sealing arrangement according to either Claim 1 or Claim 2, **characterized in that** the free end portion (32) of the sealing lip (30) is loosely positioned on the pretensioning element (38).

4. Sealing arrangement according to any one of the preceding Claims, **characterized in that** the seal (22) has two sealing lips (30) which extend away from each other in an axial direction.

5. Sealing arrangement according to Claim 4, **characterized in that** the sealing lips (30) face in the same direction one behind the other.

6. Sealing arrangement according to Claim 4 or 5, **characterized in that** the seal (22) has two sealing elements (22a, 22b) each having a sealing lip (30).

7. Sealing arrangement according to Claim 6, **characterized in that** one of the machine components (12, 14) has for the other machine component (12, 14) a rigid bearing structure (44) which is arranged in an axial direction between the two sealing elements (22a, 22b).

8. Sealing arrangement according to Claim 7, **characterized in that** the bearing structure (44) has in the bearing face (46) thereof at least one recess (48) which is preferably arranged transversely relative to the movement axis (16).

9. Sealing arrangement according to Claim 1, **characterized in that** the tough-elastic material is a polymer material, preferably polytetrafluoroethylene (PTFE).

10. Sealing arrangement according to any one of the preceding claims, **characterized in that** the pretensioning element (38) is arranged in a groove (36) of the one machine component (12, 14).

11. Sealing arrangement according to any one of the preceding claims, **characterized in that** the pretensioning element (38) consist of an elastomer material.

12. Sealing arrangement according to any one of the preceding claims, **characterized in that** the seal retention structure (20) is formed by a cartridge-like sealing insert (18) which is preferably releasably secured to the one machine component (12, 14).

13. Method (100) for producing a sealing arrangement (10) according to any one of the preceding claims, **characterized by** the following steps:
- arranging (110) the at least one pretensioning element (38) on the one machine component (12, 14) and
- subsequently pressing (120) at least one sleeve-like or disc-like seal blank (70) with the seal retention structure (20) of the one machine component (12, 14) by means of a tool mandrel with the seal (22) being formed.

## Revendications

1. Ensemble d'étanchement (10) comprenant
deux parties de machine (12, 14) agencées avec mobilité relative le long, et/ou autour d'un axe de mouvement (16),
au moins une garniture d'étanchement (22) constituée d'un matériau viscoélastique et retenue avec ajustement serré sur une structure de maintien (20), sur l'une des deux parties de machine (12, 14),
sachant que ladite garniture d'étanchement (22) est pourvue d'au moins une lèvre d'étanchement (30) qui est respectivement en applique contre l'autre partie de machine (12, 14) considérée, avec effet d'étanchement, et s'étend dans le sens axial à partir de la structure (20) de maintien de ladite garniture, en direction d'un côté (A) dudit ensemble d'étanchement (10) dont l'étanchéité doit être assurée, et
sachant qu'une région extrême libre (32) de ladite lèvre d'étanchement (30) est en appui contre l'une desdites parties de machine (12, 14), par l'intermédiaire d'au moins un élément de précontrainte (38) élastiquement déformable, de telle sorte que ladite région extrême libre (32) soit en applique contre l'autre partie de machine (12, 14) avec pression de contact bien définie,
**caractérisé par le fait que** la garniture d'étanchement (22) forme,
- par un tronçon de la lèvre d'étanchement axialement attenant à la structure (20) de maintien de ladite garniture, et dans le matériau duquel le flanc (42b) d'une rainure de ladite structure de maintien pénètre par une protubérance (43) qui fait corps avec la paroi de la partie de machine (12, 14) dotée de ladite structure de maintien (20), et se rattache audit flanc (42b) en direction du côté (A) de l'ensemble d'étanchement (10) dont l'étanchéité doit être assurée,
ou
- par un tronçon longitudinal qui recouvre radialement la structure (20) de maintien de la garniture d'étanchement et est directement appliqué contre ladite structure de maintien (20),
un palier de glissement (40) dédié aux deux parties de machine (12, 14) et doué de rigidité, c'est-à-dire substantiellement dépourvu de souplesse dans le sens radial.

2. Ensemble d'étanchement selon la revendication 1, **caractérisé par le fait que** la garniture d'étanchement (22) est retenue, sur la structure (20) de maintien de ladite garniture, avec ajustement serré dans le(s) sens radial et/ou axial.

3. Ensemble d'étanchement selon l'une des revendications 1 ou 2, **caractérisé par le fait que** la région extrême libre (32) de la lèvre d'étanchement (30) est en applique, avec jeu, contre l'élément de précontrainte (38).

4. Ensemble d'étanchement selon l'une des revendications précédentes, **caractérisé par le fait que** la garniture d'étanchement (22) compte deux lèvres d'étanchement (30) s'éloignant l'une de l'autre dans le sens axial.

5. Ensemble d'étanchement selon la revendication 4, **caractérisé par le fait que** les lèvres d'étanchement (30), placées en succession, pointent dans une même direction.

6. Ensemble d'étanchement selon la revendication 4 ou 5, **caractérisé par le fait que** la garniture d'étanchement (22) comporte deux éléments d'étanchement (22a, 22b) pourvus d'une lèvre d'étanchement (30) respective.

7. Ensemble d'étanchement selon la revendication 6, **caractérisé par le fait que** l'une des parties de machine (12, 14) présente une structure porteuse rigide (44) qui est dévolue à l'autre partie de machine (12, 14) respectivement considérée et est interposée, dans le sens axial, entre les deux éléments d'étanchement (22a, 22b).

8. Ensemble d'étanchement selon la revendication 7, **caractérisé par le fait que** la structure porteuse (44) présente, dans sa surface d'appui (46), au moins un renfoncement (48) disposé, de préférence, transversalement par rapport à l'axe de mouvement (16).

9. Ensemble d'étanchement selon la revendication 1, **caractérisé par le fait que** le matériau viscoélastique est un matériau polymère, de préférence du polytétrafluoréthylène (PTFE).

10. Ensemble d'étanchement selon l'une des revendications précédentes, **caractérisé par le fait que** l'élément de précontrainte (38) est logé dans une gorge (36) de l'une des parties de machine (12, 14).

11. Ensemble d'étanchement selon l'une des revendications précédentes, **caractérisé par le fait que** l'élément de précontrainte (38) consiste en un élastomère.

12. Ensemble d'étanchement selon l'une des revendications précédentes, **caractérisé par le fait que** la structure (20) de maintien de la garniture d'étanchement est constituée d'une pièce intégrée d'étanchement (18) du type cartouche fixée, de préférence de manière libérable, à l'une des parties de machine (12, 14).

13. Procédé (100) de fabrication d'un ensemble d'étanchement (10) conforme à l'une des revendications précédentes, **caractérisé par** les étapes suivantes :
- mise en place (110), sur l'une des parties de machine (12, 14), de l'élément de précontrainte (38) à présence minimale, et
- pressage consécutif (120) par l'intermédiaire d'un mandrin d'outillage, avec formation de la garniture d'étanchement (22), d'au moins une ébauche (70) de garniture d'étanchement en forme de douille ou de disque présentant la structure (20) de maintien de la garniture d'étanchement de l'une des parties de machine (12, 14).
